# EUROPEAN PATENT APPLICATION

(11) **EP 4 852 297 A1**
(43) Date of publication of application: **09.12.2026**
(21) Application number: 25769388.7
(22) Date of filing: 11.03.2025
(51) Int. Cl.: H02M 7/48, H02M 1/08

(54) **SERVO DRIVER AND METHOD FOR ADJUSTING SERVO DRIVER**

(30) Priority: 15.03.2024 JP 2024040838
(71) Applicant: OMRON Corporation, Kyoto-shi, Kyoto 600-8530 (JP)
(72) Inventor: UCHIDA, Takashi, Kyoto-shi, Kyoto 600-8530 (JP); AKIMA, Masahiro, Kyoto-shi, Kyoto 600-8530 (JP)
(74) Representative: Isarpatent
(86) International application number: PCT/JP2025/009053
(87) International publication number: WO 2025/192581

(57) **Abstract**

A servo driver and a method for adjusting a servo driver reduce variations in the output characteristics. The servo driver includes a power supply that outputs a predetermined voltage, a power module that outputs, to a servo motor, a drive voltage having a rate of change per unit time varying with a voltage supplied from the power supply, a feed wire connecting the power supply and the power module, and an adjuster on the feed wire to adjust a voltage to be supplied to the power module from the power supply.

## Description

### FIELD

The present invention relates to a servo driver and a method for adjusting a servo driver.

### BACKGROUND

Servo drivers include an intelligent power module (IPM) as a circuit that supplies a drive voltage to a servo motor. Patent Literature 1 describes a technique for adjusting noise and switching loss in an IPM by adjusting a capacitor and a resistor connected to connector terminals added to the IPM.

### CITATION LIST

### PATENT LITERATURE

Patent Literature 1: Japanese Unexamined Patent Application Publication No. 9-051068

### SUMMARY

### TECHNICAL PROBLEM

IPMs, which are modular units, cannot adjust dv/dt. Thus, differences among individual IPMs may cause variations in the output characteristics of servo drivers of the same model.

One aspect of the present disclosure is directed to a servo driver and a method for adjusting a servo driver that reduce variations in the output characteristics.

### SOLUTION TO PROBLEM

A servo driver according to one aspect of the present disclosure is a servo driver including a power supply that outputs a predetermined voltage, a power module that outputs, to a servo motor, a drive voltage having a rate of change per unit time varying with a voltage supplied from the power supply, a feed wire connecting the power supply and the power module, and an adjuster on the feed wire to adjust a voltage to be supplied to the power module from the power supply.

The servo driver adjusts, with the adjuster, the rate of change in the drive voltage per unit time of the power module to a target value. The servo driver thus reduces variations in the output characteristics caused by differences among individual power modules.

In the servo driver, the adjuster may include a variable resistor. The adjuster may adjust the voltage to be supplied to the power module by adjusting a resistance value of the variable resistor. The servo driver with this feature can adjust the rate of change in the drive voltage per unit time of the power module to the target value by simply adjusting the resistance value of the variable resistor.

In the servo driver, the adjuster may include a receiver that receives a command value for a voltage and a resistance adjuster that adjusts the resistance value of the variable resistor to cause the voltage to be supplied to the power module to match the command value. The servo driver with this feature can adjust the rate of change in the drive voltage per unit time of the power module to the target value for, for example, a user of the servo driver.

In the servo driver, the power module may include a first output element for an upper arm and a second output element for a lower arm. The feed wire may include a first feed wire connecting the power supply and the first output element, and may include a second feed wire connecting the power supply and the second output element. The adjuster may include a first adjuster on the first feed wire to adjust a voltage to be supplied to the first output element, and may include a second adjuster on the second feed wire to adjust a voltage to be supplied to the second output element. The servo driver with this feature can adjust the rate of change in the drive voltage per unit time of the power module to the target value for each of the upper arm and the lower arm.

### ADVANTAGEOUS EFFECTS

The technique according to the above aspects of the present disclosure reduces variations in the output characteristics of the servo driver.

### BRIEF DESCRIPTION OF THE DRAWINGS

FIG. 1 is a block diagram of an example servo driver according to an embodiment.
FIG. 2 is a block diagram of an example voltage adjustment circuit in the embodiment.
FIG. 3 is a block diagram of a controller in the embodiment, showing an example hardware configuration.
FIG. 4 is a block diagram of the controller in the embodiment, showing example processing blocks.
FIG. 5 is a flowchart of example processing for adjusting the output characteristics of the servo driver according to the embodiment.
FIG. 6 is a block diagram of an example servo driver in a comparative example.
FIGs. 7A and 7B are graphs illustrating the output characteristics of the drive voltage in servo drivers according to the embodiment.
FIGs. 8A and 8B are graphs illustrating the output characteristics of the drive voltage in servo drivers in the comparative example.
FIG. 9 is a block diagram of an example servo driver according to a first modification.

### DETAILED DESCRIPTION

### < Example Use >

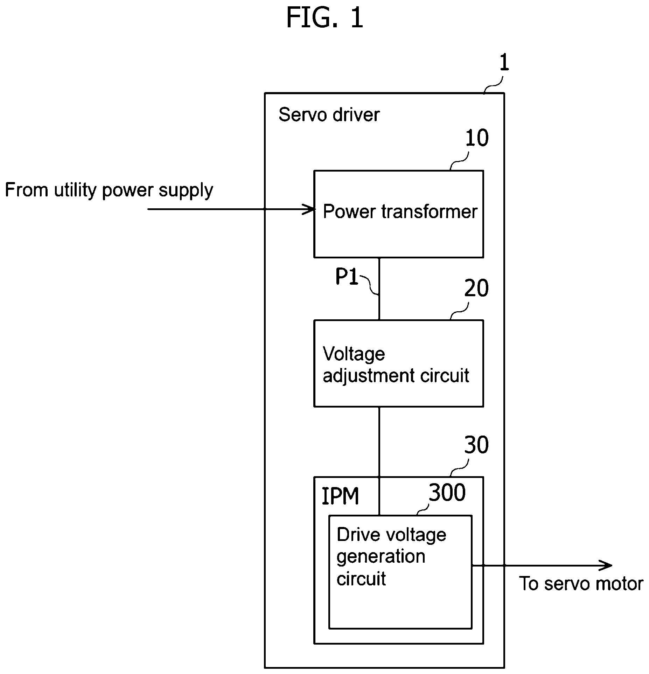

An example use of the present invention will now be described. As illustrated in FIG. 1, a servo driver 1 in this example use includes, for example, a power transformer 10, a voltage adjustment circuit 20, an intelligent power module (IPM) 30, and a feed wire P1. The power transformer 10 controls the voltage supplied from a utility power supply to cause the voltage to match a predetermined voltage, and supplies the voltage to a drive voltage generation circuit 300 in the IPM 30 through the feed wire P1. The IPM 30 is a power module that supplies a drive voltage to a servo motor. The drive voltage has a rate of change per unit time (dv/dt) that varies with the voltage supplied from the power transformer 10 to the drive voltage generation circuit 300. The feed wire P1 supplies the voltage from the power transformer 10 to the drive voltage generation circuit 300 in the IPM 30.

The IPM 30, which is a modular unit, cannot change the dv/dt value in the IPM 30. Thus, differences among individual IPMs 30 may cause variations in the output of the IPMs 30 (specifically, the output of the drive voltage generation circuits 300) in servo drivers 1 of the same model. Due to such variations, when a servo driver in a currently used servo system is replaced with another servo driver of the same model, for example, the output gain parameter for the previous servo driver may be unusable for the other servo driver. The replacement of a servo driver with another servo driver of the same model thus involves adjustment of the output gain parameter.

The servo driver 1 in this example use includes the voltage adjustment circuit 20 on the feed wire P1. The voltage adjustment circuit 20 adjusts the voltage to be supplied to the drive voltage generation circuit 300 in the IPM 30 from the power transformer 10. The voltage adjustment circuit 20 adjusting the voltage to be supplied to the drive voltage generation circuit 300 causes the dv/dt value of the IPM 30 to be adjusted. Such servo drivers 1 including the voltage adjustment circuit 20 that adjusts the voltage to be supplied to the drive voltage generation circuit 300 in the IPM 30 reduce variations in the output characteristics, which may occur to servo drivers of the same model with the same output gain parameter.

### < Embodiments >

Embodiments will be described below with reference to the drawings. FIG. 1 is a block diagram of an example of the servo driver 1 according to an embodiment. As described in the example use, the servo driver 1 includes the power transformer 10, the voltage adjustment circuit 20, the IPM 30, and the feed wire P1.

The power transformer 10 supplies a voltage to the drive voltage generation circuit 300 in the IPM 30 through the feed wire P1 based on a voltage supplied from the utility power supply. The voltage supplied from the power transformer 10 to the drive voltage generation circuit 300 in the IPM 30 is controlled to match a predetermined voltage. The predetermined voltage is, for example, 20 V. The power transformer 10 may supply a voltage to the drive voltage generation circuit 300 based on a voltage supplied from a constant-voltage power supply or an auxiliary power supply, in place of the utility power supply.

The voltage adjustment circuit 20 adjusts the voltage input from the power transformer 10 to a target voltage, and outputs the voltage to the drive voltage generation circuit 300. The voltage adjustment circuit 20 adjusts the voltage to fall within, for example, the operating voltage range of the IPM 30 (specifically, the operating voltage range of the drive voltage generation circuit 300). The operating voltage range of the IPM 30 may be, for example, +13.5 to +20 V. The drive voltage generation circuit 300 in the IPM 30 supplies a drive voltage to, for example, a servo motor based on the voltage adjusted by the voltage adjustment circuit 20.

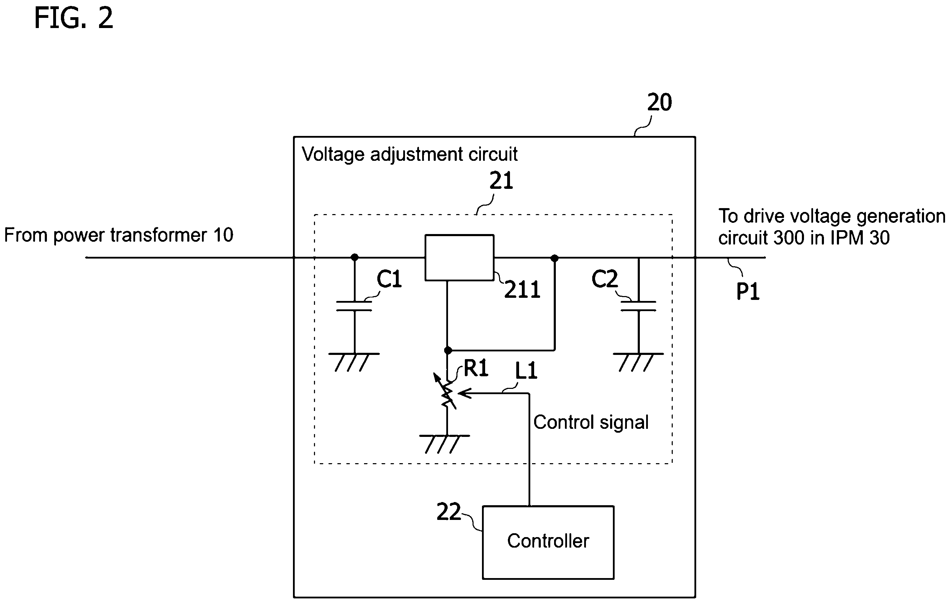

FIG. 2 is a block diagram of an example of the voltage adjustment circuit 20 in the embodiment. The voltage adjustment circuit 20 includes an adjustment circuit 21 and a controller 22.

The adjustment circuit 21 includes a three-terminal regulator 211, a variable resistor R1, and smoothing capacitors C1 and C2. The three-terminal regulator 211 adjusts the voltage input from the power transformer 10 to a voltage corresponding to the resistance value of the variable resistor R1, and outputs the voltage to the drive voltage generation circuit 300 in the IPM 30. The resistance value of the variable resistor R1 is controlled in response to, for example, a control signal provided from the controller 22 through a signal line L1.

The controller 22 is a computer that controls the resistance value of the controller 22 through the signal line L1. The controller 22 outputs a control signal to the controller 22 to change the resistance value of the controller 22 in response to, for example, a user instruction.

### < Hardware Configuration of Controller 22 >

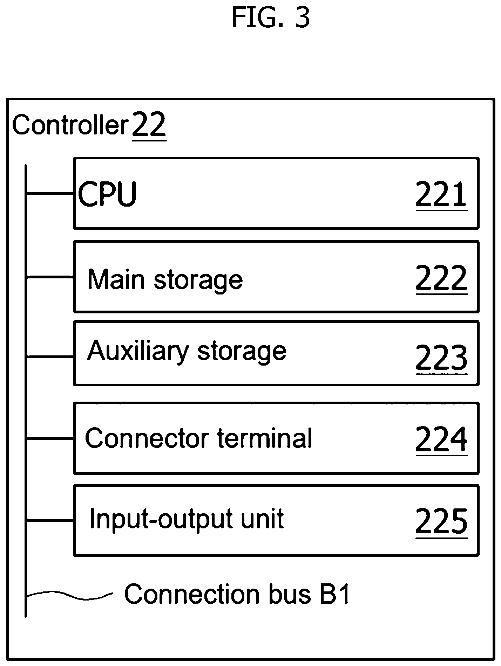

FIG. 3 is a block diagram of the controller 22 in the embodiment, showing an example hardware configuration. The controller 22 includes a central processing unit (CPU) 221, a main storage 222, an auxiliary storage 223, a connector terminal 224, an input-output unit 225, and a connection bus B1. The CPU 221, the main storage 222, the auxiliary storage 223, the connector terminal 224, and the input-output unit 225 are connected to one another with the connection bus B1.

The CPU 221 is also referred to as a microprocessor unit (MPU) or a processor. The CPU 221 is not limited to a single processor but may include multiple processors. The CPU 221 may be a single CPU connected with a single socket and having multiple cores. The process performed by the CPU 221 may be at least partially performed by a processor other than the CPU 221, including a dedicated processor such as a digital signal processor (DSP), a graphics processing unit (GPU), a numerical processor, a vector processor, or an image processor. The process performed by the CPU 221 may be at least partially performed by an integrated circuit (IC) or another digital circuit. At least a part of the CPU 221 may include an analog circuit. In the controller 22, the CPU 221 loads a program from the auxiliary storage 223 into a work area in the main storage 222 and executes the program to control peripheral devices. The controller 22 can thus perform a process for a specific purpose. The main storage 222 and the auxiliary storage 223 are storage media readable by the CPU 221.

The main storage 222 is an example of a storage that is directly accessed by the CPU 221. The main storage 222 includes a random-access memory (RAM) and a read-only memory (ROM).

The auxiliary storage 223 is a storage medium that stores various programs and various pieces of data in a readable and writable manner. The auxiliary storage 223 is also referred to as an external storage device. The auxiliary storage 223 stores, for example, an operating system (OS), various programs, and various tables.

The auxiliary storage 223 is, for example, an erasable programmable ROM (EPROM), a solid-state drive (SSD), or a hard disk drive (HDD).

The connector terminal 224 is, for example, a terminal to which the signal line L1 is connected. The CPU 221 outputs a control signal to the variable resistor R1 through the connector terminal 224 and the signal line L1.

The input-output unit 225 includes an input unit that receives an input from the user and an output unit that outputs the execution result obtained by the CPU 221. The input unit may be, for example, an input device such as a keyboard, a mouse, a trackball, a touchscreen, or a microphone. The output unit may be, for example, an output device such as a display, a status lamp, or a speaker.

### < Processing Blocks in Controller 22 >

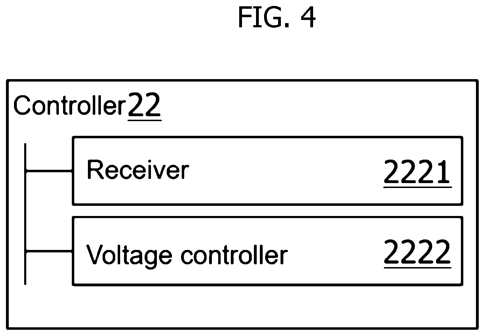

FIG. 4 is a block diagram of the controller 22 in the embodiment, showing example processing blocks. The controller 22 includes a receiver 2221 and a voltage controller 2222. The controller 22 performs processing to implement, for example, the receiver 2221 and the voltage controller 2222 by causing the CPU 221 to execute the computer program loaded into the main storage 222.

The receiver 2221 receives a command value for the voltage input by the user. The voltage controller 2222 outputs a control signal for controlling the resistance value of the variable resistor R1 to cause the output voltage of the voltage adjustment circuit 20 that is supplied to the drive voltage generation circuit 300 in the IPM 30 to match the command value received by the receiver 2221. The correspondence between the output voltage of the voltage adjustment circuit 20 and the resistance value of the variable resistor R1 may be, for example, prestored in the auxiliary storage 223. The voltage controller 2222 may refer to the correspondence to determine the resistance value of the variable resistor R1 corresponding to the command value. For example, the user can input the command value into the receiver 2221 while measuring the dv/dt value of the IPM 30 and adjusting the command value accordingly. The dv/dt value of the IPM 30 can thus be controlled to match a target value.

### < Method for Adjusting Output Characteristics of Servo Driver 1 >

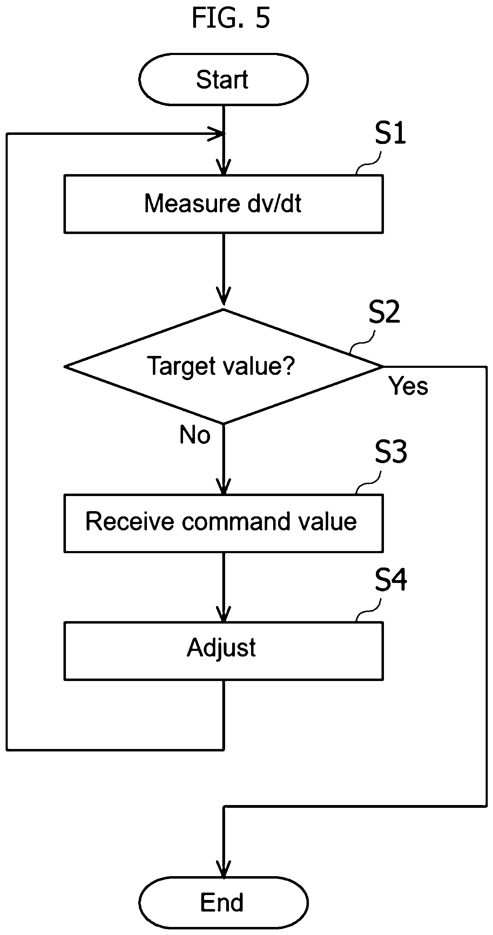

FIG. 5 is a flowchart of example processing for adjusting the output characteristics of the servo driver 1 according to the embodiment. Example processing for adjusting the output characteristics of the servo driver 1 will be described below with reference to FIG. 5.

In step S1, the dv/dt value of the voltage output by the IPM 30 is measured. The dv/dt value is measured using, for example, an oscilloscope. When the dv/dt value measured in step S1 is the target value (Yes in step S2), the processing ends. When the dv/dt value measured in step S1 is not the target value (No in step S2), the processing advances to step S3.

In step S3, the receiver 2221 receives a command value for the voltage input by the user. In step S4, the voltage controller 2222 outputs a control signal for controlling the resistance value of the variable resistor R1 to cause the output voltage of the voltage adjustment circuit 20 that is supplied to the drive voltage generation circuit 300 in the IPM 30 to match the command value received in step S3. The processing in steps S1 to S4 is repeated until the dv/dt value of the IPM 30 matches the target value.

### < Comparative Example >

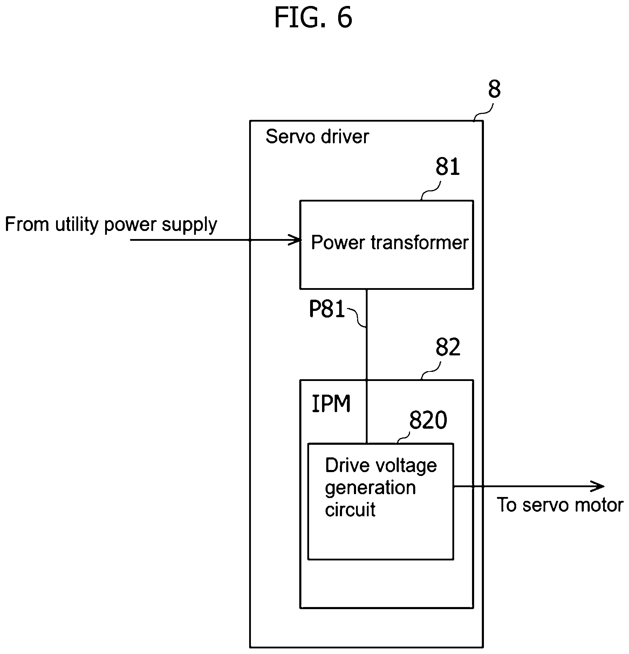

FIG. 6 is a block diagram of an example of a servo driver 8 in a comparative example. The servo driver 8 includes a power transformer 81, an IPM 82, and a feed wire P81. In the servo driver 8, the power transformer 81 supplies a predetermined voltage to a drive voltage generation circuit 820 in the IPM 82 through the feed wire P81 based on a voltage supplied from a utility power supply. The drive voltage generation circuit 820 in the IPM 82 supplies a drive voltage to, for example, a servo motor based on the voltage supplied from the power transformer 81.

### < Comparison Between Embodiment and Comparative Example >

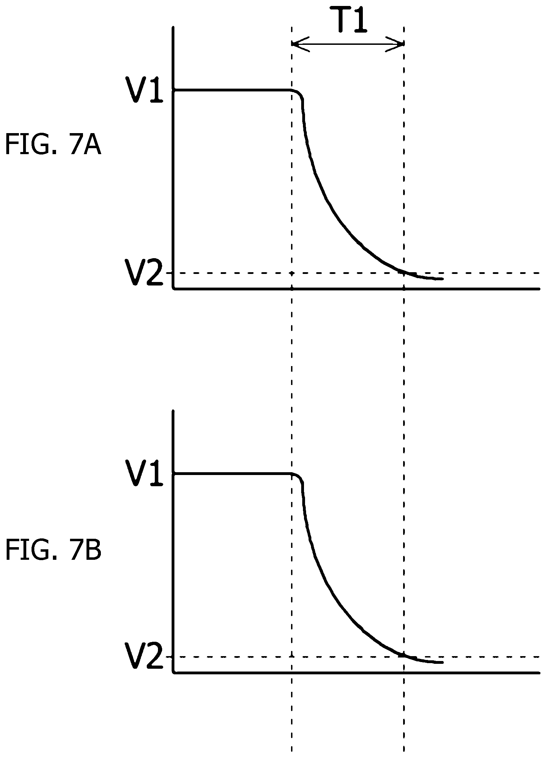

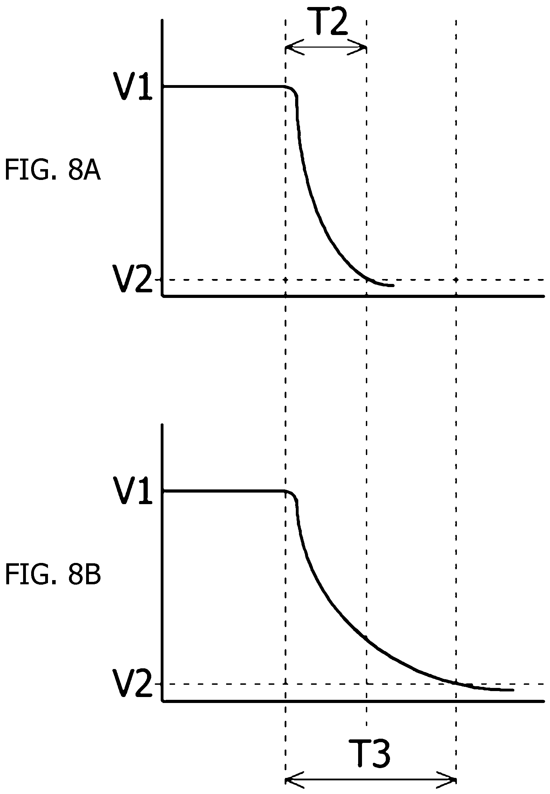

The servo driver 1 according to the embodiment and the servo driver 8 in the comparative example will now be compared. FIGs. 7A and 7B are graphs illustrating the output characteristics of the drive voltage in servo drivers 1 according to the embodiment. FIGs. 8A and 8B are graphs illustrating the output characteristics of the drive voltage in servo drivers 8 in the comparative example. In FIGs. 7A, 7B, 8A, and 8B, the vertical axis indicates voltage, and the horizontal axis indicates time.

FIGs. 7A and 7B illustrate the output characteristics of servo drivers of the same model, each of which is the servo driver 1 according to the embodiment. In the servo drivers 1 with the output characteristics illustrated in FIGs. 7A and 7B, the voltage adjustment circuits 20 are adjusted to provide the same output characteristics. FIGs. 8A and 8B illustrate the output characteristics of servo drivers of the same model, each of which is the servo driver 8 in the comparative example.

Referring to FIGs. 7A and 7B, the time taken for the voltage to change from V1 to V2 is T1 in both figures. In other words, the dv/dt value is adjusted to the same value across servo drivers 1 of the same model according to the embodiment. Referring to FIGs. 8A and 8B, the time taken for the voltage to change from V1 to V2 is T2 in FIG. 8A, whereas the time taken for the voltage to change from V1 to V2 is T3 that is different from T2 in FIG. 8B. In other words, the dv/dt value varies among individual servo drivers 8 in the comparative example.

In the present embodiment, the voltage adjustment circuit 20 is adjusted to cause the dv/dt value of the IPM 30 to match the target value. This reduces variations in the dv/dt value caused by differences among individual IPMs 30 in the present embodiment. Further, in the present embodiment, the dv/dt value of the IPM 30 can be adjusted by simply adjusting the resistance value of the variable resistor R1.

### (First Modification )

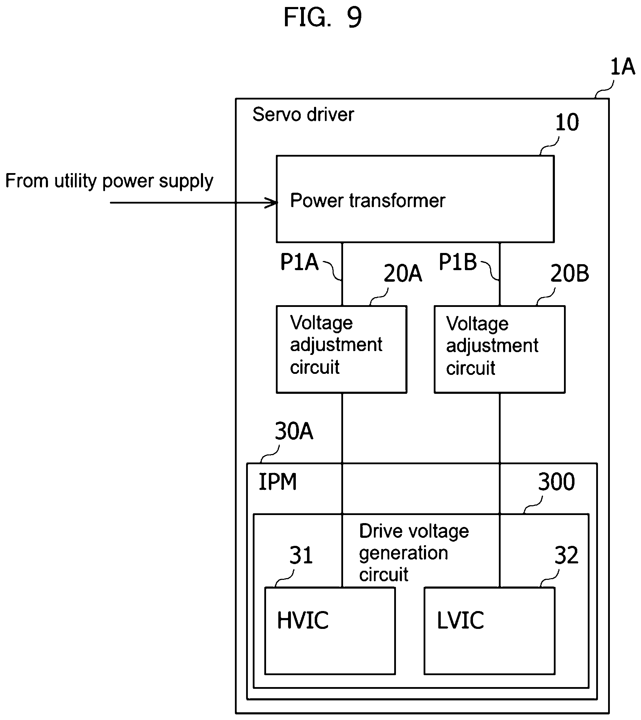

FIG. 9 is a block diagram of an example of a servo driver 1A according to a first modification. The servo driver 1A according to the first modification differs from the servo driver 1 in that the servo driver 1A includes an IPM 30A in place of the IPM 30 and includes voltage adjustment circuits 20A and 20B in place of the voltage adjustment circuit 20.

In the IPM 30A, the drive voltage generation circuit 300 includes a high voltage IC (HVIC) 31 for an upper arm and a low voltage IC (LVIC) 32 for a lower arm. The HVIC 31 is an IC that controls the voltage for the upper arm. The LVIC 32 is an IC that controls the voltage for the lower arm. The HVIC 31 receives power from the power transformer 10 through a feed wire P1A. The LVIC 32 receives power from the power transformer 10 through a feed wire P1B. The feed wire P1A supplies the voltage from the power transformer 10 to the HVIC 31. The feed wire P1B supplies the voltage from the power transformer 10 to the LVIC 32.

A voltage adjustment circuit 20A is located on the feed wire P1A. A voltage adjustment circuit 20B is located on the feed wire P1B. The voltage adjustment circuit 20A adjusts the voltage to be supplied to the HVIC 31 from the power transformer 10. The voltage adjustment circuit 20B adjusts the voltage to be supplied to the LVIC 32 from the power transformer 10.

In the servo driver 1A, the processing illustrated in FIG. 5 is performed for each of the voltage adjustment circuits 20A and 20B. In the servo driver 1A with this structure, the voltage adjustment circuit 20A adjusts the voltage to be input into the HVIC 31, and the voltage adjustment circuit 20B adjusts the voltage to be input into the LVIC 32. The servo driver 1A according to the first modification can thus adjust the dv/dt value to the target value for each of the HVIC 31 for the upper arm and the LVIC 32 for the lower arm.

### < Other Modifications >

The voltage adjustment circuit 20 may include a resistor with a fixed resistance value, in place of the variable resistor R1 included in the voltage adjustment circuit 20 in the above embodiments. In other words, the voltage adjustment circuit 20 may include a resistor having a resistance value that causes the dv/dt value to match the target value, in place of the variable resistor R1. When the variable resistor R1 is used, however, the variable resistor R1 in combination with the receiver 2221 and the voltage controller 2222 in the voltage adjustment circuit 20 allows the user to adjust the dv/dt value of the IPM 30 to the target value when the user installs the servo driver 1.

Although the voltage adjustment circuit 20 includes the controller 22 in the above embodiments, the voltage adjustment circuit 20 may not include the controller 22. In this case, the resistance value of the variable resistor R1 in the adjustment circuit 21 may be adjusted while the dv/dt value of the IPM 30 is being measured.

The above embodiments and modifications may be combined.

The technical features of the present disclosure are denoted with reference numerals.

### < Aspect 1 >

A servo driver (1), comprising:
a power supply (10) configured to output a predetermined voltage;
a power module (30, 300) configured to output a drive voltage to a servo motor, the drive voltage having a rate of change per unit time varying with a voltage supplied from the power supply (10);
a feed wire (P1) connecting the power supply (10) and the power module (30, 300); and
an adjuster (20) on the feed wire (P1), the adjuster (20) being configured to adjust a voltage to be supplied to the power module (30, 300) from the power supply (10).

### < Aspect 2 >

The servo driver (1) according to aspect 1, wherein
the adjuster (20) includes a variable resistor (R1), and
the adjuster (20) adjusts the voltage to be supplied to the power module (30, 300) by adjusting a resistance value of the variable resistor (R1).

### < Aspect 3 >

The servo driver according to aspect 2, wherein
the adjuster (20) includes
a receiver (2221) configured to receive a command value for a voltage, and
a resistance adjuster (2222) configured to adjust the resistance value of the variable resistor (R1) to cause the voltage to be supplied to the power module (30, 300) to match the command value.

### < Aspect 4 >

The servo driver according to any one of aspects 1 to 3, wherein
the power module (30, 300) includes a first output element (31) for an upper arm and a second output element (32) for a lower arm,
the feed wire (P1) includes
   a first feed wire (P1A) connecting the power supply (10) and the first output element (31), and
   a second feed wire (P1B) connecting the power supply (10) and the second output element (32), and
the adjuster (20) includes
   a first adjuster (20A) on the first feed wire (P1A), the first adjuster (20A) being configured to adjust a voltage to be supplied to the first output element (31), and
   a second adjuster (20B) on the second feed wire (P1B), the second adjuster (20B) being configured to adjust a voltage to be supplied to the second output element (32).

### < Aspect 5 >

A method for adjusting a servo driver, the servo driver (1) including a power supply (10) configured to output a predetermined voltage, a power module (30, 300) configured to output, to a servo motor, a drive voltage having a rate of change per unit time varying with a voltage supplied from the power supply (10), and an adjuster (20) on a feed wire (P1) connecting the power supply (10) and the power module (30, 300), the method comprising:
measuring the rate of change in the drive voltage per unit time (step S1 in FIG. 6); and
adjusting, with the adjuster, a voltage to be supplied to the power module from the power supply to cause the rate of change in the drive voltage per unit time to match a target value (steps S2 to S4 in FIG. 6).

### REFERENCE SIGNS LIST

1 .. servo driver
1A .. servo driver
8 .. servo driver
81 .. power transformer
82 .. IPM
10 .. power transformer
20 .. voltage adjustment circuit
20A .. voltage adjustment circuit
20B .. voltage adjustment circuit
21 .. adjustment circuit
22 .. controller
30 .. IPM
30A .. IPM
31 .. HVIC
32 .. LVIC
211 .. three-terminal regulator
221 .. CPU
222 .. main storage
223 .. auxiliary storage
224 .. connector terminal
225 .. input-output unit
300 .. drive voltage generation circuit
820 .. drive voltage generation circuit
2221 .. receiver
2222 .. voltage controller
B1 .. connection bus
C1 .. capacitor
C2 .. capacitor
L1 .. signal line
R1 .. variable resistor
P1 .. feed wire
P1A .. feed wire
P1B .. feed wire
P81 .. feed wire

## Claims

1. A servo driver, comprising:
a power supply configured to output a predetermined voltage;
a power module configured to output a drive voltage to a servo motor, the drive voltage having a rate of change per unit time varying with a voltage supplied from the power supply;
a feed wire connecting the power supply and the power module; and
an adjuster on the feed wire, the adjuster being configured to adjust a voltage to be supplied to the power module from the power supply.

2. The servo driver according to claim 1, wherein
the adjuster includes a variable resistor, and
the adjuster adjusts the voltage to be supplied to the power module by adjusting a resistance value of the variable resistor.

3. The servo driver according to claim 2, wherein
the adjuster includes
a receiver configured to receive a command value for a voltage, and
a resistance adjuster configured to adjust the resistance value of the variable resistor to cause the voltage to be supplied to the power module to match the command value.

4. The servo driver according to any one of claims 1 to 3, wherein
the power module includes a first output element for an upper arm and a second output element for a lower arm,
the feed wire includes
a first feed wire connecting the power supply and the first output element, and
a second feed wire connecting the power supply and the second output element, and
the adjuster includes
a first adjuster on the first feed wire, the first adjuster being configured to adjust a voltage to be supplied to the first output element, and
a second adjuster on the second feed wire, the second adjuster being configured to adjust a voltage to be supplied to the second output element.

5. A method for adjusting a servo driver, the servo driver including a power supply configured to output a predetermined voltage, a power module configured to output, to a servo motor, a drive voltage having a rate of change per unit time varying with a voltage supplied from the power supply, and an adjuster on a feed wire connecting the power supply and the power module, the method comprising:
measuring the rate of change in the drive voltage per unit time; and
adjusting, with the adjuster, a voltage to be supplied to the power module from the power supply to cause the rate of change in the drive voltage per unit time to match a target value.
